(19) Europäisches Patentamt
European Patent Office
Office européen des brevets

(11) EP 4 443 823 A1

(12) EUROPEAN PATENT APPLICATION

(43) Date of publication:
09.10.2024 Bulletin 2024/41

(21) Application number: 24165320.3

(22) Date of filing: 21.03.2024

(51) International Patent Classification (IPC):
**H04L 25/02** (2006.01)

(52) Cooperative Patent Classification (CPC):
**H04L 25/0224**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: 22.03.2023 KR 20230037541
09.11.2023 KR 20230154566

(71) Applicant: Samsung Electronics Co., Ltd.
Suwon-si, Gyeonggi-do 16677 (KR)

(72) Inventors:
• **PARK, Jungyong**
**16677 Suwon-si (KR)**

• **IM, Sebin**
**16677 Suwon-si (KR)**
• **KWAK, Gyoungil**
**16677 Suwon-si (KR)**
• **YOON, Hongsik**
**16677 Suwon-si (KR)**
• **KIM, Jinho**
**16677 Suwon-si (KR)**
• **KIM, Hoil**
**16677 Suwon-si (KR)**
• **JE, Huiwon**
**16677 Suwon-si (KR)**

(74) Representative: **Marks & Clerk LLP**
**15 Fetter Lane**
**London EC4A 1BW (GB)**

(54) **METHOD OF PERFORMING ENHANCED CHANNEL ESTIMATION IN NON-TERRESTRIAL NETWORK-BASED COMMUNICATION SYSTEM AND DEVICE THEREOF**

(57) An operation method of a user equipment based on non-terrestrial network (NTN) communication includes: performing channel estimation of a first broadcast channel included in a first frame; performing initial channel estimation of system information included in the first frame; performing channel estimation of a second broadcast channel included in a second frame which is subsequent to the first frame; determining a first weight corresponding to the system information, a second weight corresponding to the first broadcast channel, and a third weight corresponding to the second channel; and calculating a channel estimate of the system information based on results of the channel estimation of the first broadcast channel, the initial channel estimation of the system information and the channel estimation of the second broadcast channel, and the first weight through the third weight.

FIG. 1

EP 4 443 823 A1

Processed by Luminess, 75001 PARIS (FR)

**Description**

BACKGROUND

The embodiments of the disclosure relate to a method of performing channel estimation, and more particularly, to a method and device for performing improved channel estimation in a non-terrestrial network (NTN)-based communication system.

As a next-generation mobile communication system, satellite communication systems are being researched and developed to overcome the coverage limitations of existing terrestrial networks. A satellite communication system is expected to be able to provide low-capacity data, voice and video streaming services, etc. to users in areas where it is difficult to provide the services through existing terrestrial networks.

For initial cell detection and access in non-terrestrial networks, it is important to obtain base station system information about a system information block (SIB) to determine the link budget, and to this end, securing terminal reception performance in weak electric fields and at a low signal-to-noise ratio (SNR) may be important. Additionally, in order to secure data reception performance, improvement in the reception performance of a narrowband physical downlink shared channel (NPDSCH) and a narrowband physical downlink control channel (NPDCCH) is required.

SUMMARY

The disclosure provides improved channel estimation performance by performing channel estimation using a plurality of channels in a non-terrestrial network (NTN)-based communication system in a weak electric field.

According to an aspect of one or more embodiments, there is provided an operation method of a user equipment based on NTN communication. The operation method may include: performing channel estimation of a first broadcast channel included in a first frame; performing initial channel estimation of system information included in the first frame; performing channel estimation of a second broadcast channel included in a second frame which is subsequent to the first frame; determining a first weight corresponding to the system information, a second weight corresponding to the first broadcast channel, and a third weight corresponding to the second broadcast channel; and calculating a channel estimate of the system information based on results of the channel estimation of the first broadcast channel, the initial channel estimation of the system information and the channel estimation of the second broadcast channel, and the first weight through the third weight.

According to another aspect of one or more embodiments, there is provided a user equipment device based on NTN communication. The user equipment device may include one or more processors configured to implement: a channel estimation module configured to perform channel estimation of a first broadcast channel included in a first frame, perform initial channel estimation of system information included in the first frame, and channel estimation of a second broadcast channel included in a second frame, which is subsequent to the first frame; and a weight determination module configured to determine a first weight corresponding to the system information, a second weight corresponding to the first broadcast channel, and a third weight corresponding to the second broadcast channel, wherein the channel estimation module is further configured to calculate a channel estimate of the system information based on results of the channel estimation of the first broadcast channel, the initial channel estimation of the system information and the channel estimation of the second broadcast channel, and the first weight through the third weight.

According to another aspect of one or more embodiments, there is provided an operation method of a user equipment based on NTN communication. The operation method may include: performing channel estimation of a first broadcast channel included in a first frame; performing initial channel estimation of a unicast channel included in the first frame; performing channel estimation of a second broadcast channel included in a second frame which is subsequent to the first frame; determining a first weight corresponding to the unicast channel, a second weight corresponding to the first broadcast channel, and a third weight corresponding to the second broadcast channel; and calculating a channel estimate of the unicast channel based on results of the channel estimation of the first broadcast channel, the initial channel estimation of the unicast channel and the channel estimation of the second broadcast channel, and the first weight through the third weight.

According to an aspect of one or more embodiments, there is provided an operation method of a user equipment using NTN communication. The operation method may include: performing channel estimation of a first broadcast channel included in a first frame; performing initial channel estimation of system information included in the first frame; performing channel estimation of a second broadcast channel included in a second frame which is subsequent to the first frame; determining a first weight corresponding to the system information, a second weight corresponding to the first broadcast channel, and a third weight corresponding to the second broadcast channel; and calculating a channel estimate of the system information based on results of the channel estimation of the first broadcast channel, the initial channel estimation of the system information and the channel estimation of the second broadcast channel, and the first weight through the third weight.

According to another aspect of one or more embodiments, there is provided a user equipment device configured for NTN communication. The user equipment device may include one or more processors configured to implement: a channel estimation module configured to perform channel estimation of a first broadcast channel included in a first frame, perform initial channel estimation of system information included in the first frame, and channel estimation of a second broadcast channel included in a second frame, which is subsequent to the first frame; and a weight determination module configured to determine a first weight corresponding to the system information, a second weight corresponding to the first broadcast channel, and a third weight corresponding to the second broadcast channel, wherein the channel estimation module is further configured to calculate a channel estimate of the system information based on results of the channel estimation of the first broadcast channel, the initial channel estimation of the system information and the channel estimation of the second broadcast channel, and the first weight through the third weight.

According to another aspect of one or more embodiments, there is provided an operation method of a user equipment using NTN communication. The operation method may include: performing channel estimation of a first broadcast channel included in a first frame; performing initial channel estimation of a unicast channel included in the first frame; performing channel estimation of a second broadcast channel included in a second frame which is subsequent to the first frame; determining a first weight corresponding to the unicast channel, a second weight corresponding to the first broadcast channel, and a third weight corresponding to the second broadcast channel; and calculating a channel estimate of the unicast channel based on results of the channel estimation of the first broadcast channel, the initial channel estimation of the unicast channel and the channel estimation of the second broadcast channel, and the first weight through the third weight.

At least some of the above and other features of the invention are set out in the claims.

BRIEF DESCRIPTION OF DRAWINGS

Embodiments will be more clearly understood from the following detailed description taken in conjunction with the accompanying drawings in which:

FIG. 1 illustrates an example of a non-terrestrial network, according to one or more embodiments;

FIG. 2 is a block diagram of a base station, according to one or more embodiments;

FIG. 3 is a block diagram of a user terminal, according to one or more embodiments;

FIG. 4 is a detailed block diagram of a processor, according to one or more embodiments;

FIG. 5 illustrates a Multiple Input Multiple Output (MIMO) environment, according to one or more embodiments;

FIG. 6 illustrates a frame structure, according to one or more embodiments;

FIG. 7A is an example of a resource grid of subframe 0, according to one or more embodiments;

FIG. 7B is an example of a resource grid of subframe 4, according to one or more embodiments;

FIG. 8 is a flowchart of an operation method of a channel estimation module, according to one or more embodiments;

FIG. 9 is a flowchart of an operation method for determining a weight according to the number of narrowband reference signals (NRSs), according to one or more embodiments;

FIG. 10 is a flowchart of an operation method of a channel estimation module, according to one or more embodiments; and

FIG. 11 is a block diagram of a wireless communication device, according to one or more embodiments.

DETAILED DESCRIPTION

Hereinafter, embodiments will be described in detail with reference to the attached drawings. The embodiments described herein are non-limiting example embodiments, and thus, the disclosure is not limited thereto and may be realized in various other forms.

As used herein, an expression "at least one of" preceding a list of elements modifies the entire list of the elements and does not modify the individual elements of the list. For example, an expression, "at least one of a, b, and c" should be understood as including only a, only b, only c, both a and b, both a and c, both b and c, or all of a, b, and c. Herein, when a term "same" or "equal" is used to compare a dimension of two or more elements, the term may cover a "substantially same" or "substantially equal" dimension.

Herein, the articles "a" and "an" used herein are intended to include one or more items, and may be used interchangeably with "one or more." Where only one item is intended, the term "one" or similar language is used. For example, the term "a processor" may refer to either a single processor or multiple processors. When a processor is described as carrying out an operation and the processor is referred to perform an additional operation, the multiple operations may be executed by either a single processor or any one or a combination of multiple processors.

It will be also understood that, even if a certain step or operation of a certain method is described later than another step or operation, the step or operation may be performed later than the other step or operation unless the other step or operation is described as being performed after the step or operation.

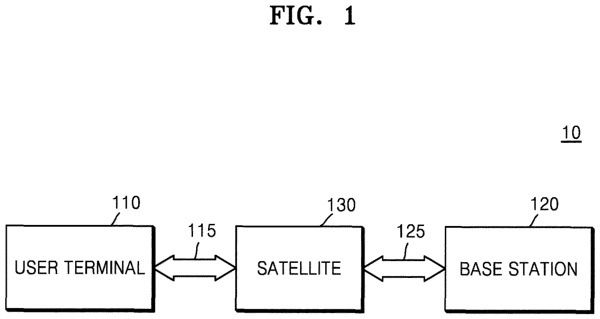

FIG. 1 illustrates an example of a non-terrestrial network 10, according to one or more embodiments.

Referring to FIG. 1, the non-terrestrial network 10 may include a user terminal 110, a base station 120, and a satellite 130.

The user terminal 110 is a device used by a user and may communicate with the base station 120 through a wireless channel. In addition to being referred to as a terminal, the user terminal 110 may be alternatively referred to as a 'user equipment (UE)', 'mobile station', 'subscriber station', 'customer premises equipment (CPE)', 'remote terminal', 'wireless terminal', or 'user device' or other terms with equivalent technical meaning. According to one or more embodiments, the user terminal 110 may establish a first link 115. For example, the user terminal 110 may form a link with the satellite 130. The first link 115 between the user terminal 110 and the satellite 130 may include, correspond to or be referred to as a service link.

The base station 120 is a network infrastructure that provides wireless access to the user terminal 110. The base station 120 may have a coverage defined as a certain geographical region based on a distance over which signals may be transmitted. Referring to FIG. 1, the user terminal 110 may be further away than the distance at which the base station 120 may directly transmit a signal, and thus, be located outside the coverage of the base station 120. In addition to being referred to as a base station, the base station 120 may be alternatively referred to as an 'access point (AP)', 'eNodeB (eNB)', 5th generation node ('SG node'), 'wireless point', or with other terms that have equivalent technical meaning.

The base station 120 may be connected to one or more 'transmission/reception points (TRPs)' through a second link 125. For example, the TRPs may include or correspond to the satellite 130. The base station 120 may transmit a downlink signal to the user terminal 110 or receive an uplink signal from the user terminal 110 through the satellite 130. A connection between the base station 120 and the satellite 130 may include or correspond to the second link 125. The second link 125 may be referred to as a feeder link.

The satellite 130 may relay communication between the base station 120 and the user terminal 110. For example, the satellite 130 may receive data from the base station 120 through the second link 125 and transmit a downlink signal to the user terminal 110 through the first link 115.

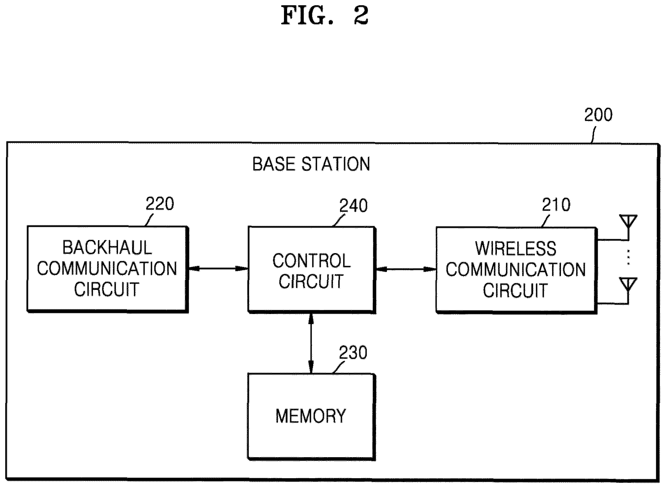

FIG. 2 is a block diagram of a base station 200, according to one or more embodiments.

Referring to FIG. 2, the base station 200 may include a wireless communication circuit 210, a backhaul communication circuit 220, a memory 230, and a control circuit 240. The base station 200 in FIG. 2 may correspond to the base station 120 in FIG. 1.

The wireless communication circuit 210 may perform functions for transmitting and receiving signals through a wireless channel. According to one or more embodiments, the wireless communication circuit 210 may perform a conversion function between a baseband signal and a bit string according to a physical layer standard of a system. For example, when transmitting data, the wireless communication circuit 210 may generate complex symbols by encoding and modulating a transmitted bit string, and when receiving data, the wireless communication circuit 210 may restore a received bit string by demodulating and decoding a baseband signal. Additionally, the wireless communication circuit 210 may up-convert a baseband signal into a radio frequency (RF) band signal and transmit the RF band signal through an antenna, or may down-convert an RF band signal received through an antenna into a baseband signal. To this end, the wireless communication circuit 210 may include a transmission filter, a reception filter, an amplifier, a mixer, an oscillator, a digital to analog converter (DAC), an analog to digital converter (ADC), etc. Alternatively or additionally, the wireless communication circuit 210 any include one or any combination of a modem and an antenna circuit driven by related software and/or firmware.

The wireless communication circuit 210 may transmit or receive signals. For example, the wireless communication circuit 210 may transmit or receive at least one of a synchronization signal, a reference signal, system information, a message, control information, and data, not being limited thereto. Additionally, the wireless communication circuit 210 may perform beamforming. The wireless communication circuit 210 may apply a beamforming weight to a signal to be transmitted to provide directionality to the signal. The wireless communication circuit 210 may also apply a beamforming weight to a signal to be received to provide directionality to the signal. The wireless communication circuit 210 may change a beam formed in the base station 200 and transmit signals repeatedly. For example, the wireless communication circuit 210 may transmit and receive signals to and from the satellite 130 of FIG. 1.

The backhaul communication circuit 220 may provide an interface for communicating with other nodes in a network. That is, the backhaul communication circuit 220 may convert a bit string transmitted from the base station 200 to another node, for example, another access node, another base station, a higher node, a core network, etc., into a physical signal and convert a physical signal received from another node into a bit string. The backhaul communication circuit 220 may include one or any combination of a modem, an antenna circuit and a WiFi chip driven by related software and/or firmware.

The memory 230 may store data such as basic programs, application programs, and setting information for operation of the base station 200. The memory 230 may include volatile memory, non-volatile memory, or a combination of volatile memory and non-volatile memory.

The control circuit 240 may control the overall operation of the base station 200. For example, the control circuit 240 may control transmission and reception of signals through the wireless communication circuit 210 or the backhaul communication circuit 220. Additionally, the control circuit 240 may write and read data to and from the memory 230. To this end, the control circuit 240 may include one or more processors. The one or more processors may include one or more of a central processing unit (CPU), a graphics processing unit (GPU), an accelerated processing unit (APU), a many integrated core (MIC), a field-programmable gate array (FPGA), a digital signal processor (DSP), a neural processing unit (NPU), a hardware accelerator, or a machine learning accelerator.

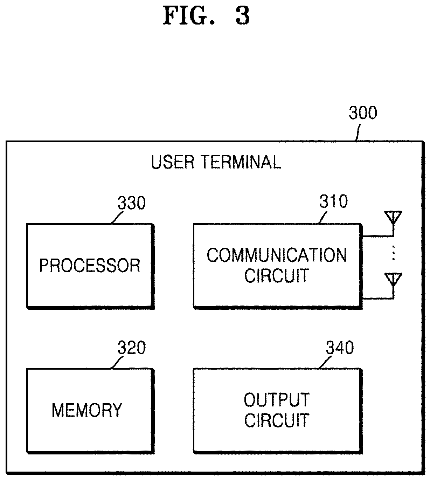

FIG. 3 is a block diagram of a user terminal 300, according to one or more embodiments.

Referring to FIG. 3, the user terminal 300 may include a communication circuit 310, a memory 320, and a processor 330. The user terminal 300 may correspond to the user terminal 110 of FIG. 1.

The communication circuit 310 may perform functions for transmitting and receiving signals through a wireless channel. For example, the communication circuit 310 may perform a conversion function between a baseband signal and a bit string according to a physical layer standard of a system. For example, when transmitting data, the communication circuit 310 may generate complex symbols by encoding and modulating a transmitted bit string, and when receiving data, the communication circuit 310 may restore a received bit string by demodulating and decoding a baseband signal. Additionally, the communication circuit 310 may up-convert a baseband signal into an RF band signal and transmit the RF band signal through an antenna, or may down-convert an RF band signal received through an antenna into a baseband signal. For example, the communication circuit 310 may include a transmission filter, a reception filter, an amplifier, a mixer, an oscillator, a DAC, an ADC, etc. Alternatively or additionally, the wireless communication circuit 210 may include one or any combination of a modem and an antenna circuit driven by related software and/or firmware. The communication circuit 310 may perform beamforming. The communication circuit 310 may apply a beamforming weight to a signal to be transmitted to provide directionality to the signal. The wireless communication circuit 3210 may also apply a beamforming weight to a signal to be received to provide directionality to the signal.

The communication circuit 310 may transmit or receive signals. The communication circuit 310 may receive at least one of a downlink signal. The downlink signal may include a synchronization signal (SS), a reference signal (RS), system information, a configuration message, control information, and downlink data.

According to one or more embodiment, the communication circuit 310 may include a plurality of antennas. For example, in a non-terrestrial network, the user terminal 300 may perform communication using at least some of the plurality of antennas.

The memory 320 may store data such as basic programs, application programs, and setting information for the operation of the user terminal 300. The memory 320 may include volatile memory, non-volatile memory, or a combination of volatile memory and non-volatile memory. Additionally, the memory 320 may provide stored data according to a request from the processor 330.

The processor 330 may control the overall operation of the user terminal 300. For example, the processor 330 may transmit and receive signals through the communication circuit 310. Additionally, the processor 330 may write data to and read data from the memory 320. The processor 330 may include at least one processor or microprocessor, or may be part of another processor. When part of the other processor, part of the communication circuit 310 and the processor 330 may be referred to as a communication processor (CP). Here, the processor 330 and the other processor may each include one or more of a central processing unit (CPU), a graphics processing unit (GPU), an accelerated processing unit (APU), a many integrated core (MIC), a field-programmable gate array (FPGA), a digital signal processor (DSP), a neural processing unit (NPU), a hardware accelerator, or a machine learning accelerator.

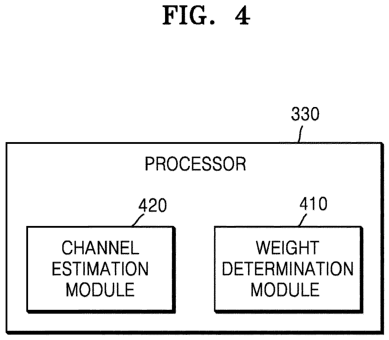

FIG. 4 is a detailed block diagram of a processor, according to one or more embodiments.

Referring to FIG. 4, a processor 330, which may be or correspond to the processor 330 shown in FIG. 3, may include or implement a weight determination module 410 and a channel estimation module 420 which may be software modules stored therein or a memory such as the memory 320 shown in FIG. 3. The weight determination module 410 may determine a plurality of weights for calculating an improved channel estimate of a narrowband system information block type 1 (SIB1-NB), which may include system information for non-terrestrial communication by the user terminal 110 such as channel information and scheduling information. The SIB1-NB may be received from the base station 120 through the satellite 130 as shown in FIG. 1. According to one or more embodiments, the plurality of weights may include a first weight to be applied to initial channel estimation of an SIB1-NB, a second weight to be applied to channel estimation of a narrowband physical broadcast channel (NPBCH) located in the same frame as the SIB1-NB (hereinafter, NPBCHO), a third weight to be applied to channel estimation of an NPBCH included in a next frame to the frame to which the SIB1-NB belongs (hereinafter referred to as NPBCH1). The sum of the first weight through the third weight may be 1.

According to another one or more embodiments, the plurality of weights may include a fourth weight indicating a ratio of RSs included in the NPBCHO, the NPBCH1, and the SIB1-NB, a fifth weight to be applied to initial channel estimation of the SIB1-NB, a sixth weight to be applied to channel estimation of the NPBCH located in the same frame as SIB1-NB (hereinafter, NPBCHO), and a seventh weight to be applied to channel estimation of the NPBCH included in the next frame to the frame to which SIB1-NB belongs (hereinafter, NPBCH1). The sum of the fourth weight through the seventh weight may be 1.

The channel estimation module 420 may perform channel estimation based on a received signal. The received signal may be modeled according to an equation below.

[Equation 1]

$$Y = H * X + N$$

Here, $Y$ is the received signal, $H$ is a wireless channel matrix, $X$ is a transmission signal transmitted from a base station, and N is a matrix corresponding to additive Gaussian noise.

The channel estimation module 420 may estimate the wireless channel matrix according to an equation below.

[Equation 2]

$$\widehat{H} = W * X^H * Y$$

Here, W is a weight matrix to improve channel estimation performance after descrambling the received signal. According to one or more embodiments, for channel estimation according to linear minimum mean squared error (LMMSE), the weight matrix may be as follows.

[Equation 3]

$$W = R_{pd} * \left( R_{pp} + \frac{\beta}{SNR} I \right)^{-1}$$

Here, $R_{pd}$ indicates a cross-correlation between a pilot signal and a data signal, $R_{pp}$ indicates a correlation between pilot signals, and $\beta$ indicates a scaling factor according to a modulation method of a transmission signal. However, the channel estimation method is not limited to LMMSE described above, and various other estimation methods may be considered.

According to one or more embodiments, the channel estimation module 420 may perform improved channel estimation of SIB1-NB. According to one or more embodiments, the channel estimation module 420 may obtain an improved channel estimate of the SIB1-NB by summing up an initial channel estimate of the SIB1-NB, a channel estimate of the NPBCH0 and a channel estimate of the NPBCH1. Here, the first weight may be applied to initial channel estimation of the SIB1-NB, the second weight may be applied to channel estimation of the NPBCHO, and the third weight may be applied to channel estimation of the NPBCH1. According to another one or more embodiments, the channel estimation module 420 may obtain an improved channel estimate of the SIB1-NB by summing up a channel estimate of NRS, an initial channel estimate of the SIB1-NB, a channel estimate of the NPBCHO, and a channel estimate of the NPBCH1. Here, the fourth weight may be applied to channel estimation of the NRS, the fifth weight may be applied to initial channel estimation of the SIB1-NB, the sixth weight may be applied to channel estimation of the NPBCHO, and the seventh weight may be applied to channel estimation of the NPBCH1.

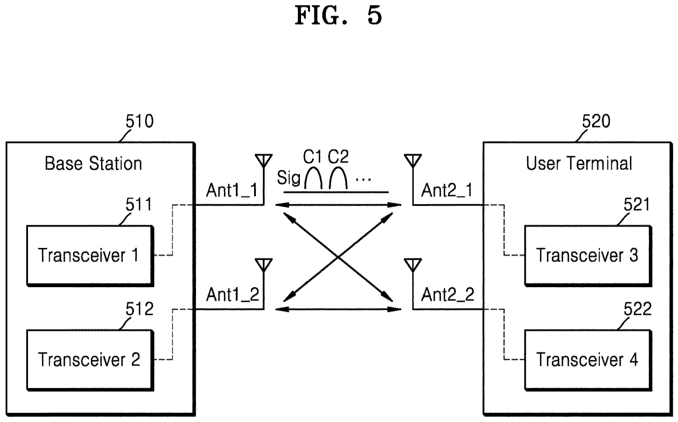

FIG. 5 illustrates a multiple input multiple output (MIMO) environment, according to one or more embodiments.

Referring to FIG. 5, a base station 510 and a user terminal 520 may communicate with each other using a MIMO method. To this end, the base station 510 may have a plurality of antennas Ant1_1, Ant1_2, etc., and the user terminal 520 may also have a plurality of antennas Ant2_1, and Ant2_2, etc. In FIG. 4, the base station 510 and the user terminal 520 are shown as including two antennas Ant1_1 and Ant1_2 and Ant2_1 and Ant2_2, respectively, but the disclosure is not limited thereto. According to one or more embodiments, the base station 510 and the user terminal 520 may each include two or more antennas.

For example, the base station 510 may include a first transceiver 511, a second transceiver 512, the first antenna Ant1_1 and the second antenna Ant1_2. The first transceiver 511 and the second transceiver 512 may each be connected to one antenna. For example, the first transceiver 511 may be connected to the first antenna Ant1_1, and the second transceiver 512 may be connected to the second antenna Ant1_2. When the base station 510 operates as a transmitting device, the first transceiver 511 and the second transceiver 512 may each operate as a transmitter, and when the base station 510 operates as a receiving device, the first transceiver 511 and the second transceiver 512 may each operate as a receiver.

The first transceiver 511 may generate a first signal Sig by merging a first component carrier signal C1 with a second component carrier signal C2 in a transmission mode, and output the generated first signal Sig to the user terminal 520. The first transceiver 511 may extract not only the first component carrier signal C1 but also the second component carrier signal C2 from the first signal Sig. The first transceiver 511 and the second transceiver 512 may each transmit not only one component carrier signal but may merge and transmit a plurality of component carrier signals, and may extract not only one component carrier signal from the first signal Sig but also a plurality of component carrier signals. The user terminal 520 may include a third transceiver 521, a fourth transceiver 522, the third antenna Ant2_1 and the fourth antenna Ant2_2. Since the user terminal 520 may be substantially the same as or similar to the base station 510 in transmitting and extracting the carrier signals, the description thereof will be omitted.

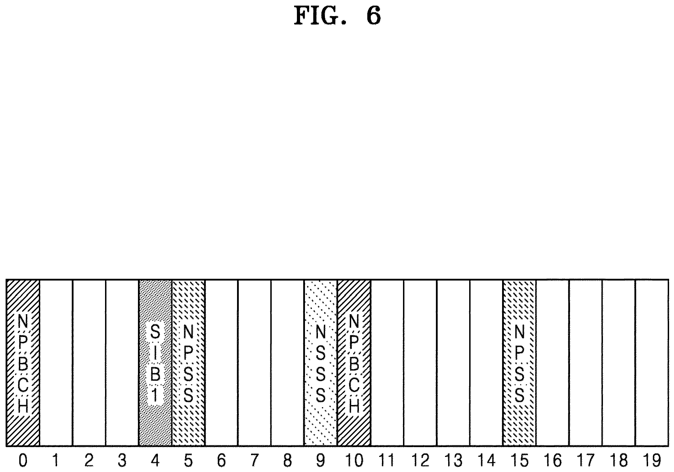

FIG. 6 illustrates a frame structure for a transmission or reception signal, according to one or more embodiments.

Referring to FIG. 6, n-th frames and (n+1)th frames may be alternately repeated in a transmission or reception signal, where n is an odd number. Each frame may be divided into ten subframes. An NPBCH may be repeatedly transmitted every tenth subframe. For example, the NPBCH may be transmitted in a first subframe of every frame. The NPBCH may be transmitted in a first subframe of the n-th frames (or subframe #0) and a first subframe of (n+1)th frames (or subframe #10). A narrowband primary synchronization signal (NPSS) may be repeatedly transmitted every tenth subframe. For example, the NPSS may be transmitted in a sixth subframe of every frame. The NPSS may be transmitted in the sixth subframe (or subframe #5) of n-th frames and the sixth subframe (or subframe #15) of (n+1)th frames. A narrowband secondary synchronization signal (NSSS) may be repeatedly transmitted every 20th subframe. For example, the NSSS may be transmitted every two frames. The NSSS may be transmitted in a tenth subframe of n-th frames (subframe #9). An SIB1-NB may be transmitted through a narrowband physical downlink shared channel (NPDSCH) repeatedly every two frames within sixteen consecutive radio frames. For example, the SIB1-NB may be transmitted in a fifth frame of n-th frames (or subframe #4).

According to one or more embodiment, the NPBCH and the SIB1-NB, which are transmitted regardless of a target device, may correspond to a broadcast channel. A narrowband physical downlink control channel (NPDCCH) and the NPDSCH transmitted to a target device as a destination may correspond to a unicast channel.

According to one or more embodiments, to improve the reception performance of the SIB1-NB included in the NPDSCH of the fifth subframe of n-th frames (subframe #4) corresponding to the SIB1-NB, the channel estimation module 420 may obtain a result of an improved channel estimation of the SIB1-NB (subframe #4) by summing up results of channel estimation of the NPBCH0 (subframe #0) and the NPBCH1 (subframe #10) with a result of an initial channel estimation of the SIB1-NB (subframe #4) according to a predetermined weight.

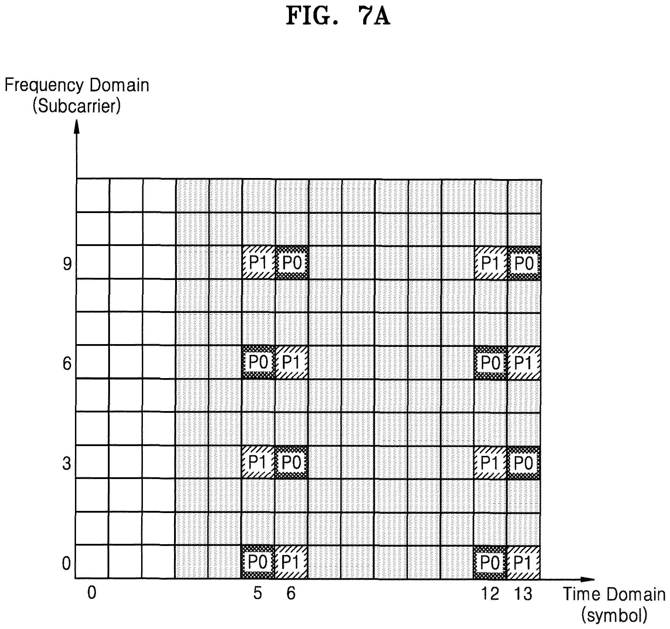

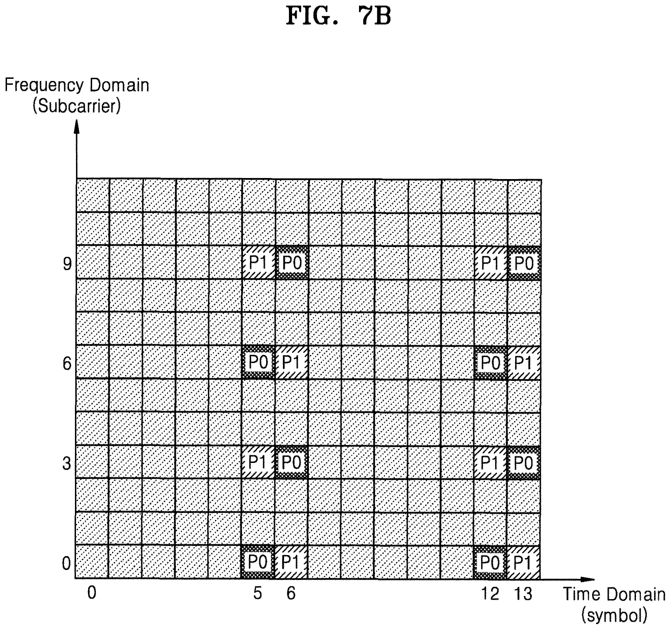

FIG. 7A illustrates an example of a resource grid of subframe 0, according to one or more embodiments, and FIG. 7B illustrates an example of a resource grid of subframe 4, according to one or more embodiments.

Referring to FIG. 7A, subframe 0 may correspond to an NPBCH. The NPBCH may be transmitted only in OFDM symbols 3 to 13 among OFDM symbols 0 to 13. An NRS may be transmitted in OFDM symbols 5, 6, 12 and 13. OFDM symbols 0 to 2 may be left blank to avoid potential conflict with a Long-Term Evolution (LTE) control channel. For example, if an antenna port of the user terminal 300 is a 1-port, an NRS may be transmitted through resources (or resource elements (REs)) on subcarriers 0 and 6 of OFDM symbol 5, subcarriers 0 and 6 of OFDM symbol 12, subcarriers 3 and 9 of OFDM symbol 6, and subcarriers 3 and 9 of OFDM symbol 13. If an antenna port is a 2-port, in order that subcarriers do not overlap, NRSs of other ports may be transmitted through resources neighboring the resources in the case of the 1-port (resources on subcarriers 3 and 9 of OFDM symbol 5, subcarriers 3 and 9 of OFDM symbol 12, subcarriers 0 and 6 of OFDM symbol 6, and subcarriers 0 and 6 of OFDM symbol 13).

According to one or more embodiments, the channel estimation module 420 may perform channel estimation based on the NRSs. The NRS-based channel estimation may be as follows.

[Equation 4]

$$\widehat{H}_{NRS} = W * X^H_{NRS} * Y_{NRS}$$

According to one or more embodiment, the channel estimation module 420 may perform channel estimation based on the NPBCH. The NPBCH-based channel estimation may be as follows.

[Equation 5]

$$\widehat{H}_{NPBCH} = W * X^H_{NPBCH} * Y_{NPBCH}$$

Referring to FIG. 7B, subframe 4 may be any one of the NPDCCH, NPDSCH, and SIB1-NB. Any one of the NPDCCH, NPDSCH and SIB 1-NB may be transmitted through OFDM symbols 0 to 13. An NRS may be transmitted in OFDM symbols 5, 6, 12 and 13. For example, if an antenna port is a 1-port, the NRS may be transmitted through resources on subcarriers 0 and 6 of OFDM symbol 5, subcarriers 0 and 6 of OFDM symbol 12, subcarriers 3 and 9 of OFDM symbol 6, and subcarriers 3 and 9 of OFDM symbol 13. If an antenna port is a 2-port, in order that subcarriers do not overlap, NRSs of other ports may be transmitted through resources neighboring the resources in the case of the 1-port (resources on subcarriers 3 and 9 of OFDM symbol 5, subcarriers 3 and 9 of OFDM symbol 12, subcarriers 0 and 6 of OFDM symbol 6, and subcarriers 0 and 6 of OFDM symbol 13).

According to one or more embodiments, the channel estimation module 420 may perform channel estimation based on any one of the NPDSCH, NPDCCH, and SIB1-NB. Channel estimation based on any one of the NPDSCH, NPDCCH, and SIB1-NB may be as follows.

[Equation 6]

$$\widehat{H}_{NPDSCH} = W * X^H_{NPDSCH} * Y_{NPDSCH}$$

[Equation 7]

$$\widehat{H}_{NPDCCH} = W * X^H_{NPDCCH} * Y_{NPDCCH}$$

[Equation 8]

$$\widehat{H}_{SIB1} = W * X^H_{SIB1} * Y_{SIB1}$$

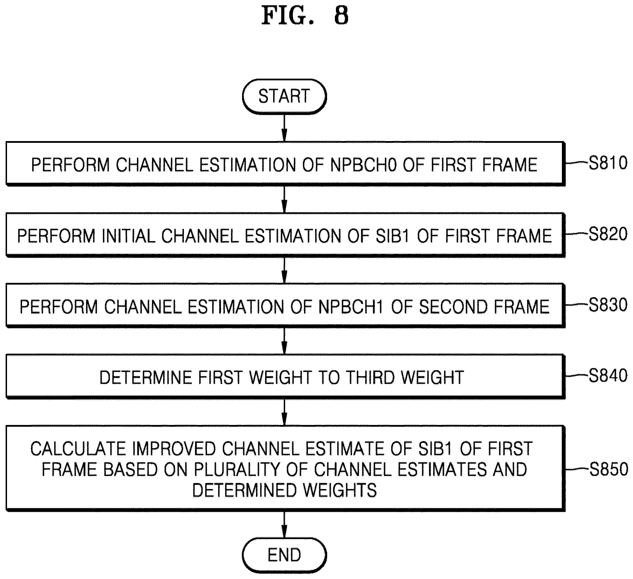

FIG. 8 is a flowchart of an operation method of the channel estimation module 420, according to one or more embodiments.

Referring to FIG. 8, in operation S810, the channel estimation module 420 may perform channel estimation of an NPBCH0 of a first frame. For example, the first frame may correspond to the n-th frames in FIG. 6. The NPBCH0 may correspond to a first subframe of the first frame. For example, the NPBCH0 may correspond to subframe 0 (subframe #0) in FIG. 6. The channel estimation module 420 may perform channel estimation of the NPBCH0 of the first frame according to Equation 5 above.

In operation S820, the channel estimation module 420 may perform channel estimation of an SIB1-NB of the first frame. The SIB1-NB may be included in an NPDSCH transmitted through a fifth subframe (subframe #4) of the first frame. The channel estimation module 420 may perform channel estimation of the SIB1-NB of the first frame according to Equation 8 above. A result of the channel estimation performed according to operation S820 may correspond to initial channel estimation of the SIB1-NB.

In operation S830, the channel estimation module 420 may perform channel estimation of an NPBCH1 of a second frame. For example, the second frame may correspond to the (n+1)th frames in FIG. 6, and may be a next frame to the first frame. The NPBCH1 may correspond to a first subframe of the second frame. For example, the NPBCH1 may correspond to an 11th subframe (subframe #10) of FIG. 6. The channel estimation module 420 may perform channel estimation for NPBCH1 according to Equation 5 above.

In operation S840, the weight determination module 410 may determine a first weight through a third weight.

The first weight is a weight to be applied to initial channel estimation of SIB1-NB, the second weight is a weight to be applied to channel estimation of an NPBCH of the first frame (NPBCHO), and the third weight is a weight to be applied to channel estimation of an NPBCH of the second frame (NPBCH1). The weight determination module 410 may determine the first weight through the third weight according to the equation below.

[Equation 9]

$$w_1 = 1 - w_{NPBCH}$$

$$w_2 = 0.1 * \left(10 - TTI_{0,1} \% 10\right) * w_{NPBCH}$$

$$w_3 = 0.1 * \left(TTI_{1,1} \% 10\right) * w_{NPBCH}$$

Here, $w_1$ is the first weight, $w_2$ is the second weight, $w_3$ is the third weight, $TTI_{0,1}$ indicates a subframe interval between the NPBCH0 and the SIB1-NB, and $TTI_{1,1}$ indicates a subframe interval between the NPBCH1 and the SIB1-NB. Also, $w_{NPBCH}$ is a coefficient for calculating the weights of the SIB1-NB, NPBCHO, and NPBCH1 and is a value obtained experimentally. For example, the coefficient $w_{NPBCH}$ may be 0.6, but is not limited thereto, and may have different values depending on values measured in various communication environments. Referring to Equation 9, the weight determination module 410 may determine a weight equal to a transmission time interval (TTI) between the fifth subframe corresponding to the SIB1-NB and the NPBCH neighboring the SIB1-NB (e.g., NPBCHO, NPBCH1).

In operation S850, the channel estimation module 420 may calculate an improved channel estimate of the SIB1-NB based on a plurality of channel estimates and the determined weights. For example, the channel estimation module 420 may calculate an improved channel estimate of the SIB1-NB according to an equation below.

[Equation 10]

$$\hat{H}'_{SIB1} = w_1 * \hat{H}_{SIB1} + w_2 * \hat{H}_{NPBCH0} + w_3 * \hat{H}_{NPBCH1}$$

However, in the above-described embodiment, the first weight through the third weight are shown to be based on a TTI between the NPBCH0 and the NPBCH1 based on the SIB 1-NB, but are not limited thereto. According to one or more embodiments, the first weight through the third weight may be variably set based on a signal-to-noise ratio (SNR), a Doppler spread, a residual frequency offset, etc.

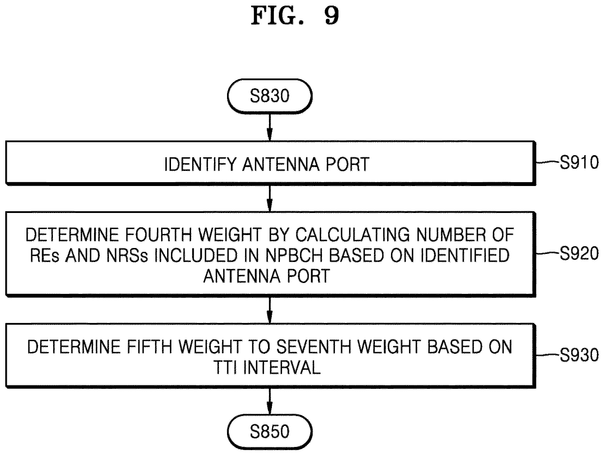

FIG. 9 is a flowchart of an operation method for determining a weight according to the number of NRSs, according to one or more embodiments.

Referring to FIG. 9, in operation S910, the weight determination module 410 may identify an antenna port. The processor 330 may obtain configuration information about the antenna port based on downlink control information (DCI), and provide the same to the weight determination module 410. The weight determination module 410 may identify an antenna port based on DCI. For example, the weight determination module 410 may identify whether the antenna port is a 1-port or a 2-port.

In operation S920, the weight determination module 410 may determine a fourth weight by calculating the number of NRSs based on the identified antenna port. For example, referring to FIGS. 7A and 7B together, in the case of the 1-port, there may be only RSs corresponding to P0. Therefore, the number of NRSs per subframe in the 1-port case may be eight. In another example, referring to FIGS. 7A and 7B together, in the case of the 2-port, there may be RSs corresponding to P0 and P1. Therefore, the number of NRSs per subframe in the 2-port case may be 16. The fourth weight may be determined according to the number of REs included in the NPBCH. For example, the fourth weight in the case of the 1-port may be $\frac{1}{108}$, and the fourth weight in the case of the 2-port may be $\frac{1}{100}$.

In operation S930, the weight determination module 410 may determine a fifth weight through a seventh weight based on a TTI. The fifth weight may be a weight to be applied to initial channel estimation of the SIB1-NB, the sixth weight may be a weight to be applied to channel estimation of the NPBCH located in the same frame as the SIB1-NB (hereinafter, NPBCHO), and the seventh weight may be a weight to be applied to channel estimation of the NPBCH included in a next frame to the frame to which the SIB1-NB belongs (hereinafter, NPBCH1). The weight determination module 410 may determine the fifth weight through the seventh weight based on Equation 9. The sum of the fourth weight through the seventh weight may be 1.

However, in the above-described embodiments, the fourth weight through the seventh weight are shown to be based on a ratio between the number of NRSs and the remaining REs included in the NPBCH and a TTI between the NPBCH0 and the NPBCH1 based on the SIB1-NB, but the disclosure is not limited thereto. According to one or more embodiments, the fourth weight through the seventh weight may be variably set based on an SNR, a Doppler spread, a residual frequency offset, etc.

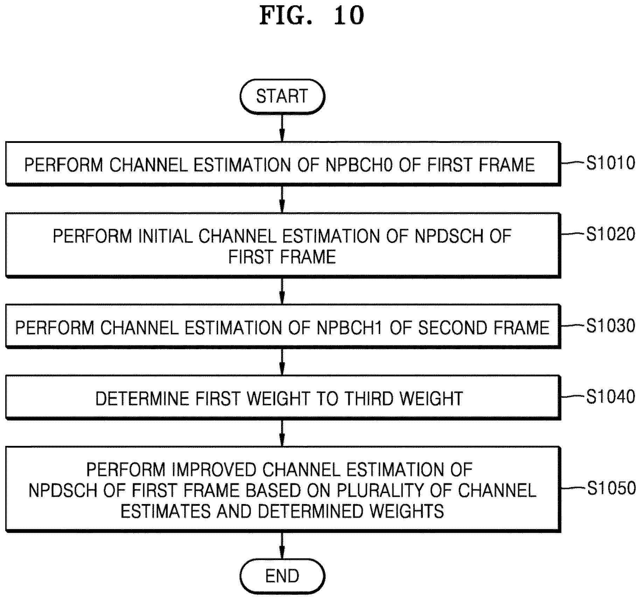

FIG. 10 is a flowchart of an operation method of the channel estimation module 420, according to one or more embodiments.

Referring to FIG. 10, in operation S1010, the channel estimation module 420 may perform channel estimation of an NPBCH0 of a first frame. For example, the first frame may correspond to the n-th frame in FIG. 6. The NPBCH0 may correspond to a first subframe of the first frame. For example, the NPBCH0 may correspond to subframe 0 (subframe #0) in FIG. 6. The channel estimation module 420 may perform channel estimation of the NPBCH0 of the first frame according to Equation 5 above.

In operation S1020, the channel estimation module 420 may perform channel estimation of an NPDSCH (or NPDCCH) of the first frame. The NPDSCH (or NPDCCH) may be transmitted through a second subframe (subframe #1) to a fifth subframe (subframe #4) of the first frame. The channel estimation module 420 may perform channel estimation of the NPDSCH (or NPDCCH) of the first frame according to Equation 6 (or Equation 7). A result of channel estimation performed according to operation S1020 may correspond to initial channel estimation for the NPDSCH (or NPDCCH).

In operation S1030, the channel estimation module 420 may perform channel estimation of an NPBCH1 of a second frame. For example, the second frame may correspond to the (n+1)th frame in FIG. 6, and may be a next frame to the first frame. The NPBCH1 may correspond to a first subframe of the first frame. For example, the NPBCH1 may correspond to an 11th subframe (subframe #10) of FIG. 6. The channel estimation module 420 may perform channel estimation of the NPBCH1 according to Equation 5 above.

In operation S1040, the weight determination module 410 may determine a first weight through a third weight. The first weight is a weight to be applied to initial channel estimation of the NPDSCH (or NPDCCH), the second weight is a weight to be applied to channel estimation of the NPBCH of the first frame (NPBCHO), and the third weight is a weight to be applied to channel estimation of the NPBCH of the second frame (NPBCH1). The weight determination module 410 may determine the first weight through the third weight according to an equation below.

[Equation 11]

$$w_1 = 1 - w_{NPDSCH}$$

$$w_2 = 0.1 * \left(10 - TTI_{0,1} \% 10\right) * w_{NPDSCH}$$

$$w_3 = 0.1 * \left(TTI_{1,1} \% 10\right) * w_{NPDSCH}$$

Here, $w_1$ is the first weight, $w_2$ is the second weight, $w_3$ is the third weight, $TTI_{0,1}$ indicates a subframe interval between a target NPDSCH and the SIB1-NB, and $TTI_{1,1}$ indicates a subframe interval between the target NPDSCH and the SIB1-NB. Referring to Equation 11, the weight determination module 410 may determine a weight corresponding to a TTI between the subframe corresponding to the target NPDSCH and the NPBCH neighboring the target NPDSCH (e.g., NPBCHO, NPBCH1).

In operation S1050, the channel estimation module 420 may calculate an improved channel estimate of the NPDSCH based on a plurality of channel estimates and the determined weights. For example, the channel estimation module 420 may calculate an improved channel estimate of the NPDSCH according to an equation below.

[Equation 12]

$$\hat{H}'_{NPDSCH} = w_1 * \hat{H}_{NPDSCH} + w_2 * \hat{H}_{NPBCH0} + w_3 * \hat{H}_{NPBCH1}$$

However, in the above-described embodiment, the first weight through the third weight are shown to be based on a TTI between the NPBCH0 and the NPBCH1 based on the SIB1-NB, but are not limited thereto. According to one or more embodiments, the first weight through the third weight may be variably set based on an SNR, a Doppler spread, a residual frequency offset, etc.

In the above-described embodiment, improved channel estimation of the NPDSCH (or NPDCCH) is described, but the disclosure is not limited thereto. According to one or more embodiments, the channel estimation module 420 may calculate an improved channel estimate of an NRS. Here, the channel estimation module 420 may calculate an improved channel estimate of the NRS based on a result of channel estimation of at least one of an NPBCH, an SIB1-NB, an NPDSCH, an NPDCCH, an NPSS, and an NSSS. However, the NPSS and the NSSS may be applied only when an antenna port is a 1-port. For example, the channel estimation module 420 may have improved channel estimation performance for the NRS by considering channels for which estimation has already been completed, among the NPBCH, SIB 1-NB, NPDSCH, NPDCCH, NPSS, and NSSS as pilot signals.

According to one or more embodiments, improved channel estimation may be performed in addition to channel estimation of an NRS. For example, the channel estimation module 420 may have improved channel estimation performance by considering a result of channel estimation of an NPBCH, for which channel estimation has already been performed, as a pilot signal, and the improved channel estimation may be as below.

[Equation 13]

$$\hat{H} = \alpha 0 \hat{H}_{\mathrm{NRS}} + \alpha 1 \hat{H}_{\mathrm{NPBCH}}$$

Here, $\hat{H}$ represents an improved channel estimate of either the NPDSCH, the NPDCCH, or the SIB1-NB, $\alpha_0$ represents a weight value applied to initial channel estimation for NRS, $\alpha_1$ represents a weight value applied to channel estimation of the NPBCH, respectively.

According to one or more embodiments, improved channel estimation may be performed in addition to channel estimation of an NRS. For example, the channel estimation module 420 may have improved channel estimation performance by considering a result of channel estimation of an NPBCH and an SIB1-NB, for which channel estimation has already been performed, as a pilot signal, and the improved channel estimation may be as below.

[Equation 14]

$$\hat{H} = \alpha 0 \hat{H}_{\mathrm{NRS}} + \alpha 1 \hat{H}_{\mathrm{NPBCH}} + \alpha 2 \hat{H}_{\mathrm{SIB1}}$$

Here, $\hat{H}$ represents an improved channel estimate of either the NPDSCH or the NPDCCH, $\alpha_0$ represents a weight value applied to the initial channel estimation of the NRS, $\alpha_1$ represents a weight value applied to channel estimation of the NPBCH, $\alpha_2$ represents a weight value applied to channel estimation of the SIB1-NB.

According to one or more embodiments, improved channel estimation may be performed in addition to channel estimation of an NRS. For example, the channel estimation module 420 may have improved channel estimation performance by considering a result of channel estimation of an NPBCH, an SIB1-NB, and an NPDCCH for which channel estimation has already been performed, as a pilot signal, and the improved channel estimation may be as below.

[Equation 15]

$$\hat{H} = \alpha 0 \hat{H}_{\mathrm{NRS}} + \alpha 1 \hat{H}_{\mathrm{NPBCH}} + \alpha 2 \hat{H}_{\mathrm{SIB1}} + \alpha 3 \hat{H}_{\mathrm{NPDCCH}}$$

Here, $\hat{H}$ represents an improved channel estimate of either the NPDSCH or the NPDCCH, $\alpha_0$ represents a weight value applied to initial channel estimation of the NRS, $\alpha_1$ represents a weight value applied to channel estimation of the NPBCH, $\alpha_2$ represents a weight value applied to channel estimation of the SIB1-NB, and $\alpha_3$ represents a weight value applied to channel estimation of the NPDCCH.

According to one or more embodiments, improved channel estimation may be performed in addition to channel estimation of an NRS. For example, the channel estimation module 420 may have improved channel estimation performance by considering a result of channel estimation of an NPBCH, an SIB1-NB, an NPDCCH, and an NPDSCH for which channel estimation has already been performed, as a pilot signal, and the improved channel estimation is as below.

[Equation 16]

$$\hat{H} = \alpha 0 \hat{H}_{\mathrm{NRS}} + \alpha 1 \hat{H}_{\mathrm{NPBCH}} + \alpha 2 \hat{H}_{\mathrm{SIB1}} + \alpha 3 \hat{H}_{\mathrm{NPDCCH}} + \alpha 4 \hat{H}_{\mathrm{NPDSCH}}$$

Here, $\hat{H}$ represents an improved channel estimate of either the NPDSCH or the NPDCCH, $\alpha_0$ represents a

weight value applied to initial channel estimation of the NRS, $\alpha_1$ represents a weight value applied to channel estimation of the NPBCH, $\alpha_2$ represents a weight value applied to channel estimation of the SIB 1-NB, $\alpha_3$ represents a weight value applied to channel estimation of the NPDCCH, and $\alpha_4$ represents a weight value applied to channel estimation of the NPDSCH.

According to one or more embodiments, improved channel estimation may be performed in addition to channel estimation of an NRS. For example, the channel estimation module 420 may have improved channel estimation performance by considering a result of channel estimation of an NPBCH, an SIB 1-NB, an NPDCCH, an NPDSCH, an NPSS, and an NSSS for which channel estimation has already been performed, as a pilot signal, and the improved channel estimation may be as below.

[Equation 17]

$$\hat{H} = \alpha 0 \hat{H}_{\text{NRS}} + \alpha 1 \hat{H}_{\text{NPBCH}} + \alpha 2 \hat{H}_{\text{SIB1}} + \alpha 3 \hat{H}_{\text{NPDCCH}} + \alpha 4 \hat{H}_{\text{NPDSCH}} + \alpha 5 \hat{H}_{\text{NPSS}} + \alpha 6 \hat{H}_{\text{NSSS}}$$

Here, $\hat{H}$ represents an improved channel estimate of either the NPDSCH or the NPDCCH, $\alpha_0$ represents a weight value applied to initial channel estimation of the NRS, $\alpha_1$ represents a weight value applied to channel estimation of the NPBCH, $\alpha_2$ represents a weight value applied to channel estimation of the SIB 1-NB, $\alpha_3$ represents a weight value applied to channel estimation of the NPDCCH, $\alpha_4$ represents a weight value applied to channel estimation of the NPDSCH, $\alpha_5$ represents a weight value applied to channel estimation of NPSS, and $\alpha_6$ represents a weight value applied to channel estimation of NSSS. Additionally, the use of the NPSS and the NSSS may be limited to cases where an antenna port is a 1-port. The weights $\alpha_1$ to $\alpha_6$ described above may be set variably based on an SNR, a Doppler spread, a residual frequency offset, etc.

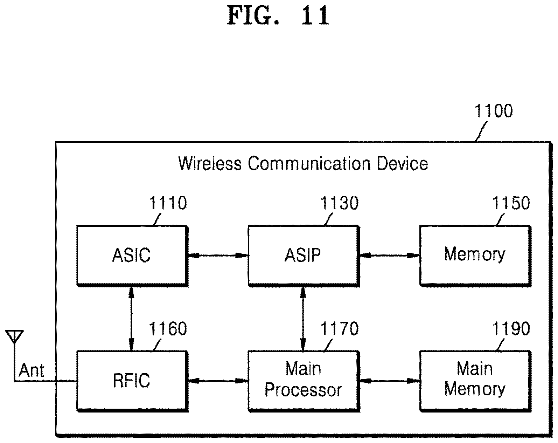

FIG. 11 is a block diagram of a wireless communication device 1100, according to one or more embodiments.

Referring to FIG. 11, the wireless communication device 1100 may include a modem (MODEM) (not shown) and a radio frequency integrated circuit (RFIC) 1160, and the modem may include an application specific integrated circuit (ASIC) 1110, an application specific instruction set processor (ASIP) 1130, a memory 1150, a main processor 1170, and a main memory 1190. The wireless communication device 1100 of FIG. 11 may be a user terminal 110, according to one or more embodiments.

The RFIC 1160 may be connected to an antenna Ant, and may receive signals from or transmit signals to the outside using a wireless communication network. The ASIP 1130 may be an integrated circuit customized for a specific purpose, and may support a dedicated instruction set for a specific application and execute instructions included in the instruction set. The memory 1150 may communicate with the ASIP 1130 and may store a plurality of instructions executed by the ASIP 1130 as a non-transitory storage device. For example, the memory 1150 may include, but is not limited to, any type of memory accessible by the ASIP 1130, such as random access memory (RAM), read only memory (ROM), tape, a magnetic disk, an optical disk, a volatile memory, a non-volatile memory, and combinations thereof.

The main processor 1170 may control the wireless communication device 1100 by executing a plurality of instructions. For example, the main processor 1170 may control the ASIC 1110 and the ASIP 1130, process data received through a wireless communication network, or process a user input with respect to the wireless communication device 1100. The main memory 1190 may communicate with the main processor 1170 and, as a non-transitory storage device, may store a plurality of instructions executed by the main processor 1170. For example, the main memory 1190 may include, but is not limited to, any type of memory accessible by the main processor 1170, such as RAM, ROM, tape, a magnetic disk, an optical disk, a volatile memory, a non-volatile memory, and combinations thereof.

In the wireless communication deice 1100, the main processor 1170, the ASIP 1130 and the ASIC 1110 may be or correspond to the processor 330 of the user terminal 300 shown in FIGS. 1, 3 and 4, and the memory 1150 and the main memory 1190 may be or correspond to the memory 320 of the same user terminal 300. Further, the instructions executed by the main processor 1170 or the ASIP 1130 at the control of the main processor 1170 may correspond to the above-described functions or operations performed by the weight determination module 410 and the channel estimation module 420 of the processor 330 of the user terminal shown in FIGS. 1, 3 and 4.

In the above embodiments for non-terrestrial network communication, an improved channel estimate of system information such as the SIB1 is calculated based on a result of channel estimation of one or more of a plurality of channels, such as NPBCHs and NPDSCSs in different frames, and a plurality of reference signals such as the NRSs, and corresponding weights applied thereto. However, the disclosure is not limited thereto, and thus, an improved channel estimate of other types of system information in the non-terrestrial network communication may also be calculated based on a result of channel estimation of one or more of different types of channels and reference signals and corresponding weights applied thereto, according to one or more embodiments.

While the disclosure has been particularly shown and described with reference to embodiments thereof, it will be understood that various changes in form and details may be made therein without departing from the spirit and scope of the following claims. Therefore, the true technical protection scope of the disclosure should be determined by the technical spirit of the attached claims.

**Claims**

1. An operation method of a user equipment based on non-terrestrial network communication, the operation method comprising:

   performing channel estimation of a first broadcast channel included in a first frame;
   performing initial channel estimation of system information included in the first frame;
   performing channel estimation of a second broadcast channel included in a second frame which is subsequent to the first frame;
   determining a first weight corresponding to the system information, a second weight corresponding to the first broadcast channel, and a third weight corresponding to the second broadcast channel; and
   calculating a channel estimate of the system information based on results of the channel estimation of the first broadcast channel, the initial channel estimation of the system information and the channel estimation of the second broadcast channel, and the first weight through the third weight.

2. The operation method of claim 1, wherein each of the first weight through the third weight is a variable based on at least one of a signal-to-noise ratio (SNR), a Doppler spread, and a residual frequency offset.

3. The operation method of claim 1 or 2, wherein a sum of the first weight through the third weight corresponds to 1.

4. The operation method of any preceding claim, wherein each of the second weight and the third weight is determined based on a subframe interval between the system information and the first broadcast channel of the first frame and a subframe interval between the system information and the second broadcast channel of the second frame.

5. The operation method of any preceding claim, wherein the calculating the channel estimate of the system information comprises summing up a product of the first weight and an initial channel estimate of the system information, a product of the second weight and a channel estimate of the first broadcast channel of the first frame, and a product of the third weight and a channel estimate of the second broadcast channel of the second frame.

6. The operation method of any of claims 1 to 4, further comprising:

   identifying an antenna port;
   performing channel estimation of a reference signal; and
   determining a fourth weight based on a number of reference signals included in the first broadcast channel based on the identified antenna port.

7. The operation method of claim 6, wherein the fourth weight corresponds to a ratio between the number of reference signals included in the first broadcast channel and a number of resource elements remaining in the first broadcast channel except the reference signals, and
   wherein the calculating the channel estimate of the system information comprises summing up a product of the first weight and the initial channel estimate of the system information, a product of the second weight and the channel estimate of the first broadcast channel of the first frame, a product of the third weight and the channel estimate of the second broadcast channel of the second frame, and a product of the fourth weight and a channel estimate of the reference signal.

8. The operation method of any preceding claim, wherein the system information comprises system information block type 1 (SIB 1), the first channel comprises a first narrowband physical broadcast channel (NPBCH), and the second channel comprises a second NPBCH.

9. A user equipment device based on non-terrestrial network communication, the user equipment device comprising one or more processors configured to implement:

a channel estimation module configured to perform channel estimation of a first broadcast channel included in a first frame, perform initial channel estimation of system information included in the first frame, and channel estimation of a second broadcast channel included in a second frame, which is subsequent to the first frame; and a weight determination module configured to determine a first weight corresponding to the system information, a second weight corresponding to the first broadcast channel, and a third weight corresponding to the second broadcast channel,

wherein the channel estimation module is further configured to calculate a channel estimate of the system information based on results of the channel estimation of the first broadcast channel, the initial channel estimation of the system information and the channel estimation of the second broadcast channel, and the first weight through the third weight.

10. The user equipment device of claim 9, wherein each of the first weight through the third weight is a variable based on at least one of a signal-to-noise ratio (SNR), a Doppler spread, and a residual frequency offset, and wherein a sum of the first weight to the third weight corresponds to 1.

11. The user equipment device of claim 9 or 10, wherein each of the second weight and the third weight is determined based on a subframe interval between the system information and the first broadcast channel of the first frame and a subframe interval between the system information and the second broadcast channel of the second frame.

12. The user equipment device of any of claims 9 to 11, wherein the channel estimation module is further configured to calculate a channel estimate of the system information by summing up a product of the first weight and an initial channel estimate of the system information, a product of the second weight and a channel estimate of the first broadcast channel of the first frame, and a product of the third weight and a channel estimate of the second broadcast channel of the second frame.

13. The user equipment device of any of claims 9 to 11, wherein the channel estimation module is further configured to identify an antenna port, perform channel estimation of a reference signal, and determine a fourth weight based on a number of reference signals included in the first broadcast channel based on the identified antenna port.

14. The user equipment device of claim 13, wherein the fourth weight corresponds to a ratio of the number of reference signals included in the first broadcast channel and a number of resource elements remaining in the first broadcast channel except the reference signals, and wherein the channel estimation module is configured to calculate the channel estimate of the system information by summing up a product of the first weight and an initial channel estimate of the system information, a product of the second weight and a channel estimate of the first broadcast channel of the first frame, a product of the third weight and a channel estimate of the second broadcast channel of the second frame, and a product of the fourth weight and a channel estimate of the reference signal.

15. The user equipment device of any of claims 9 to 14, wherein the system information comprises system information block type 1 (SIB1), the first channel comprises a first narrowband physical broadcast channel (NPBCH), and the second channel comprises a second NPBCH.

# FIG. 1

<u>10</u>

110        130        120

| USER TERMINAL | ↔ 115 | SATELLITE | ↔ 125 | BASE STATION |

# FIG. 2

200

## BASE STATION

220

**BACKHAUL COMMUNICATION CIRCUIT**

240

**CONTROL CIRCUIT**

210

**WIRELESS COMMUNICATION CIRCUIT**

230

**MEMORY**

# FIG. 3

300

USER TERMINAL

330

PROCESSOR

310

COMMUNICATION CIRCUIT

320

MEMORY

340

OUTPUT CIRCUIT

# FIG. 4

330

PROCESSOR

420

CHANNEL
ESTIMATION
MODULE

410

WEIGHT
DETERMINATION
MODULE

# FIG. 5

# FIG. 6

# FIG. 7A

# FIG. 7B

# FIG. 8

START

PERFORM CHANNEL ESTIMATION OF NPBCH0 OF FIRST FRAME —S810

PERFORM INITIAL CHANNEL ESTIMATION OF SIB1 OF FIRST FRAME —S820

PERFORM CHANNEL ESTIMATION OF NPBCH1 OF SECOND FRAME —S830

DETERMINE FIRST WEIGHT TO THIRD WEIGHT —S840

CALCULATE IMPROVED CHANNEL ESTIMATE OF SIB1 OF FIRST FRAME BASED ON PLURALITY OF CHANNEL ESTIMATES AND DETERMINED WEIGHTS —S850

END

# FIG. 9

```
┌──────────┐
│   S830   │
└──────────┘
      │
      ▼
┌─────────────────────────────────────────────────────────┐
│              IDENTIFY ANTENNA PORT                       │──S910
└─────────────────────────────────────────────────────────┘
      │
      ▼
┌─────────────────────────────────────────────────────────┐
│  DETERMINE FOURTH WEIGHT BY CALCULATING NUMBER OF        │
│  REs AND NRSs INCLUDED IN NPBCH BASED ON IDENTIFIED      │──S920
│                  ANTENNA PORT                            │
└─────────────────────────────────────────────────────────┘
      │
      ▼
┌─────────────────────────────────────────────────────────┐
│  DETERMINE FIFTH WEIGHT TO SEVENTH WEIGHT BASED ON       │
│                  TTI INTERVAL                            │──S930
└─────────────────────────────────────────────────────────┘
      │
      ▼
┌──────────┐
│   S850   │
└──────────┘
```

# FIG. 10

START

PERFORM CHANNEL ESTIMATION OF NPBCH0 OF FIRST FRAME ——S1010

PERFORM INITIAL CHANNEL ESTIMATION OF NPDSCH OF FIRST FRAME ——S1020

PERFORM CHANNEL ESTIMATION OF NPBCH1 OF SECOND FRAME ——S1030

DETERMINE FIRST WEIGHT TO THIRD WEIGHT ——S1040

PERFORM IMPROVED CHANNEL ESTIMATION OF NPDSCH OF FIRST FRAME BASED ON PLURALITY OF CHANNEL ESTIMATES AND DETERMINED WEIGHTS ——S1050

END

# FIG. 11

Wireless Communication Device (1100)

ASIC (1110) ↔ ASIP (1130) ↔ Memory (1150)

RFIC (1160) ↔ Main Processor (1170) ↔ Main Memory (1190)

Ant → RFIC

Europäisches
Patentamt

European
Patent Office

Office européen
des brevets

## EUROPEAN SEARCH REPORT

**Application Number**

EP 24 16 5320

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ERICSSON: "On the performance of MIB-NB and SIB1-NB acquisition", 3GPP DRAFT; R1-1701895 - ON THE PERFORMANCE OF MIB-NB AND SIB1-NB ACQUISITION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS , vol. RAN WG1, no. Athens, Greece; 20170213 - 20170217 12 February 2017 (2017-02-12), XP051209058, Retrieved from the Internet: URL:http://www.3gpp.org/ftp/Meetings_3GPP_ SYNC/RAN1/Docs/ [retrieved on 2017-02-12] * observation 1, pages 3 and 5 * | 1-15 | INV. H04L25/02 |
| A | EDDY KWON ET AL: "Interlace Common Hopping", 3GPP2 DRAFT; C30-20060731-035-SAMSUNG-RL INTERLACE COMMON HOPPING, 3RD GENERATION PARTNERSHIP PROJECT 2, 3GPP2, 2500 WILSON BOULEVARD, SUITE 300, ARLINGTON, VIRGINIA 22201 ; USA , vol. TSGC 2 August 2006 (2006-08-02), pages 1-11, XP062064476, Retrieved from the Internet: URL:http://ftp.3gpp2.org/TSGC/Working/2006 /2006-07-Montreal/TSG-C-2006-07-31-Montrea l/WG3/ [retrieved on 2006-08-02] * page 8 * | 1-15 | **TECHNICAL FIELDS SEARCHED (IPC)** H04L |

-/--

The present search report has been drawn up for all claims

| Place of search | Date of completion of the search | Examiner |
|---|---|---|
| Munich | 18 July 2024 | Belloni, Paolo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

**EUROPEAN SEARCH REPORT**

Application Number

EP 24 16 5320

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2020/396744 A1 (XIONG GANG [US] ET AL) 17 December 2020 (2020-12-17) * the whole document * | 1,9 | |
| A | ERICSSON: "System information acquisition time reduction for NB-IoT", 3GPP DRAFT; R1-1801495 SYSTEM INFORMATION ACQUISITION TIME REDUCTION FOR NB-IOT, 3RD GENERATION PARTNERSHIP PROJECT (3GPP), MOBILE COMPETENCE CENTRE ; 650, ROUTE DES LUCIOLES ; F-06921 SOPHIA-ANTIPOLI , vol. RAN WG1, no. Athens, Greece; 20180226 - 20180302 17 February 2018 (2018-02-17), XP051397593, Retrieved from the Internet: URL:http://www.3gpp.org/ftp/tsg%5Fran/WG1% 5FRL1/TSGR1%5F92/Docs/ [retrieved on 2018-02-17] * the whole document * | 1,9 | |

**TECHNICAL FIELDS SEARCHED (IPC)**

The present search report has been drawn up for all claims

| Place of search | Date of completion of the search | Examiner |
|---|---|---|
| Munich | 18 July 2024 | Belloni, Paolo |

EPO FORM 1503 03.82 (P04C01)

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

## ANNEX TO THE EUROPEAN SEARCH REPORT
## ON EUROPEAN PATENT APPLICATION NO.

EP 24 16 5320

This annex lists the patent family members relating to the patent documents cited in the above-mentioned European search report.
The members are as contained in the European Patent Office EDP file on
The European Patent Office is in no way liable for these particulars which are merely given for the purpose of information.

18-07-2024

| Patent document cited in search report | Publication date | Patent family member(s) | Publication date |
|---|---|---|---|
| US 2020396744 A1 | 17-12-2020 | NONE | |